(19)

**Europäisches Patentamt**
**European Patent Office**
**Office européen des brevets**

(11) **EP 3 893 446 A1**

(12) **EUROPEAN PATENT APPLICATION**

(43) Date of publication:
**13.10.2021 Bulletin 2021/41**

(51) Int Cl.:
*H04L 12/40* (2006.01)     *B61L 15/00* (2006.01)

(21) Application number: **20168770.4**

(22) Date of filing: **08.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **plc-tec AG**
**5607 Hägglingen (CH)**

(72) Inventors:
• **Dominiak, Stephen**
  **Bolingbrook, IL 60490 (US)**

• **Kneubühler, Thomas**
  **8816 Hirzel (CH)**
• **Sadamori, Leyna**
  **6005 Luzern (CH)**
• **Wassner, Jürgen**
  **6038 Gisikon (CH)**

(74) Representative: **Keller Schneider**
**Patent- und Markenanwälte AG (Bern)**
**Eigerstrasse 2**
**Postfach**
**3000 Bern 14 (CH)**

(54) **DATA TRANSMISSION WITHIN A TRAIN**

(57)     The invention relates to a communication method for communication through a train communication backbone, i. e. a data communication bus based on PLC communication technology that enables a fast and reliable message exchange between the nodes connected to the communication backbone. The communication method includes transmitting a request message (21) from a master node ($N_M$) onto the data bus wherein each slave node ($N_S$) that receives the request message (21) answers that message with a response message (22). Once no further slave node ($N_S$) responds, the master role is assigned to one of the slave nodes known so far and the new master node transmits another request message (21) onto the data bus. In this way, further slave nodes ($N_S$) will respond and may be identified. Then, the reallocation of the master role to another slave node continues until every node connected to the data bus has been reached.

**Fig. 1**

**Description**

**Technical Field**

The invention relates to a method for data transmission within a rail vehicle with two or more vehicle units mechanically coupled to each other, each vehicle unit comprising a power cabling, wherein the power cabling of the vehicle units are connected to each other to form a power supply network, transmitting a message from a master transceiver included in one of the vehicle units to at least one slave transceiver included in another one of the vehicle units using the power supply network as a data communication bus. The invention further relates to a transceiver for carrying out the method and a vehicle unit of a rail vehicle including such a transceiver.

**Background Art**

In recent years, much has been invested in communication infrastructure in trains. However, this has been done almost exclusively in the area of passenger transport. With broadband data transmission within a passenger train, not only timetable data can be transmitted offline or in real time to each carriage and, if necessary, displayed on a corresponding screen, but it is also possible, for example, to offer passengers data services such as Internet access and the like.

In trains for cargo transportation, the need for data transmission has further increased due to the trend towards building intelligent freight trains including for example automation for the coupling/decoupling of wagons, braking, train integrity monitoring, train inauguration, wagon ordering, etc. One of the main goals is for example an automated train inauguration in freight trains. The composition of freight trains changes frequently, often daily. It is therefore extremely time-consuming to manually identify the newly coupled cars and to determine their order. The term train inauguration as used herein designates the identification of and the allocation of an address to each of the newly connected cars as well as to determine the order of these cars.

However, there does hardly exist any automation in freight trains today. One of the reasons is that, although communication technologies for passenger trains are known, these technologies are too expensive to be implemented in cargo trains. They usually need an additional dedicated communication network that has to be provided throughout the whole train which requires large investments in hardware and infrastructure.

Regarding communication within trains, it is to distinguish between so called consist networks that serve as a communication network within a single carriage or within a multi-unit train (MU) and a communication backbone that interconnects the MUs and/or the single carriages. The term carriage thereby is to be understood to include any vehicle used for the carrying of freight or passengers on a rail transport system and for example includes railroad cars, railcars, railway wagons, trucks, or railway carriages, train cars or train wagons and the like. Such cars may be coupled together and are usually hauled by one or more locomotives to form a train. A MU on the other side is a usually self-propelled train composed of one and usually more carriages that are permanently coupled together to form a vehicle unit. The term permanently in this connection means that the single carriages or cars of a MU are not separated during normal operation but usually only in case of maintenance or repair. Accordingly, such MUs do usually include communication infrastructure for internal communication such as a consist network or the like. In a cargo train a consist is usually composed of a single freight wagon. These networks are based on a communication infrastructure that is fixedly installed within the MU such as for example an Ethernet, a CAN bus or other dedicated cabling. Such a communication cabling runs from the first to the last car of the MU and it is not intended that the cabling between two cars of the MU is disconnected during normal operation of the MU. Of course, two or more MUs, two or more single carriages or a mixture thereof may be coupled together to form a train, wherein the communication networks of the MUs and the single carriages are coupled together to form a train communication network for data transmission within the train. As such trains do usually exist for several days, weeks or even months, the coupling of the communication networks is usually done manually by sticking together the dedicated plugs and connectors at the end of each MU or single carriage. These dedicated plugs and connectors are rather expensive and therefore not suited for cargo trains where costs have to be kept as low as possible.

Usually, the consist networks of each MU of a train are interconnected by means of a communication backbone such as a Train Backbone Network (TBN) wherein each MU includes a gateway device that is connected on the one side to the gateway devices of the neighboring MUs to form the backbone and on the other side to the consist network within that MU.

Document WO 98/19885 A1 for example discloses a car identification and ordering system for trains. The train includes a number of cars that are coupled to each other via mechanical couplings 17a, b, ... and a communication network including a twisted pair cable in each of the cars that are connected to each other via dedicated connectors 32a, b, ... In order to achieve long distance communication each car includes a corresponding repeater 24a, b, ... for amplifying the signals. Each car further includes a car controller and a master controller is located in the front car where the controllers may communicate through the twisted pair cable. Car identification and ordering is initiated by the master controller by sending a message to the first car. Then, the first car transfers the message to the second car and disables its repeater to prevent that the second car receives further communication from the master. Then, the second car transfers the message to the third car and disables its repeater and so on. Then, the master sends an identification request to the first car, which responds by sending an identification message to the master and then re-enables its repeater such that the second car may receive the masters messages and so on until the last car has sent its identification message to the master.

This train communication system requires an additional, dedicated communication system resulting in a complex system with additional hardware and a complex and time consuming process for car identification and ordering.

It is also known to use wireless communication technologies for transmitting data between two cars within a train. And it is further known to transmit data between two cars within a train over the power line cabling running through a train.

Document WO 2006/075767 A2 discloses such a train communication system. The train includes an electric wire (line 4) running from the front car through every intermediate car to the back car of the train for supplying power to each car. The electric wires of two adjacent cars are connected to each other via relays 6 placed near the coupling sections 5 of the respective cars. Communication is established via PLC (powerline communication) modems 7 that are connected to the electric wire. Multiple PLC modems may be provided where one or more terminals, each having a unique IP address, may be connected to a PLC modem.

Although this system makes use of an existing power line for communication it does require many different PLC modems to provide communication to each of the terminals. Furthermore, this document does not disclose how to determine the order of the cars and it does not provide for a reliable repeater functionality in case of long trains. And in addition, each of the communicating units, the PLC modems, is directly connected to the electric wire which therefore also carries the communication between terminals of the same car and is accordingly very busy resulting in frequent communication errors due to package loss etc.

Moreover, the prior art does not deal with other requirements in such train communication systems such as for example the high demands on the transmission speed regarding data periodicity and transmission latency as well as the difficulties resulting from a large number of nodes (cars).

Accordingly, there is a need for a highly reliable and fast data communication within trains which not only enables an efficient and reliable data transmission within a train during normal operation but also enables a fast and reliable train inauguration after the composition of a new freight train.

## Summary of the invention

It is an object of the invention to provide a method for data transmission within a rail vehicle pertaining to the technical field initially mentioned, that enables a fast and reliable train inauguration as well as a fast and reliable data transmission within trains during normal operation allowing for high demands regarding data periodicity and transmission latency and that may handle a large number of cars at reasonable costs.

It is another object of the invention to provide a corresponding transceiver for carrying out this method and it is a further object of the invention to provide a corresponding vehicle unit including such a transceiver.

The solution of the invention regarding the method for data transmission is specified by the features of claim 1. According to the invention the method for data transmission includes a step of addressing the transceivers wherein the step of addressing the transceivers includes the steps of

a) transmitting a request message over the data communication bus by the master transceiver,

b) receiving the request message by at least one slave transceiver,

c) transmitting a response message over the data communication bus by each slave transceiver that has received the request message,

d) receiving the response message of each slave transceiver by the master transceiver,

e) assigning an address by the master transceiver to each slave transceiver whose response has been received by the master transceiver,

f) selecting one of the transceivers that has already been assigned an address as a new master transceiver and

g) repeating steps a) to f) until each vehicle unit of the rail vehicle that includes a transceiver is assigned an address.

This method has the advantage that an existing cabling, namely the power supply network that is provided in most trains anyway, whether freight or passenger trains. And by using the claimed master-slave communication method each and every transceiver of the train can be reached and addressed independent of the length of the train and the number of transceivers. In this way, a reliable repeater functionality and therewith a reliable method for identifying and addressing all of the cars coupled to each other in a train is achieved.

Identification and addressing of the cars of a train may for example be accomplished for trains up to a length of 1500 meters or even more.

Once an address has been assigned to each of the transceivers that is usually assigned to a particular car of the train, data such as for example messages may be transmitted from any of the transceivers to any other transceiver present and addressed, i. e. from any of the cars of the train to any other car of the train, either directly or indirectly via other transceivers. Usually, Messages are transferred from the front car to the other cars of a train where the front car is a locomotive or the like.

Accordingly, the term transmitting/receiving data or a message by a vehicle unit means transmitting/receiving the data or message by a transceiver assigned to that vehicle unit.

The term rail vehicle in this connection designates a train that includes two or more vehicle units and is also designated simply as a train hereinafter. And the term vehicle unit designates a single car or a MU as described above. Unless otherwise specified, the term car is to be understood in the following to designate such a vehicle unit.

The master transceiver is preferably located in the first vehicle unit of the rail vehicle, wherein the first vehicle unit usually is a drive unit of the rail vehicle, i. e. a powered vehicle unit for moving thr rail vehicle such as locomotives, trainsets and the like. However, the master transceiver may also by located in any other car of the train, for example in the last car of a train or in an intermediate car. And the drive unit does not necesserily have to be the first car in train. It may also be the last or an intermediate car of the train. Furthermore, a train may include two or more drive units.

The data communication bus is herein also designated as a data bus or simply as a bus.

In a preferred embodiment of the invention, the method further includes the step of connecting the transceiver of at least one vehicle unit, preferably all vehicle units, to an internal communication network of that vehicle unit. For example, the transceiver is connected to a consist network of the vehicle unit thereby enabling a data transmission between devices located in different vehicle units via the corresponding transceivers.

In such a configuration, the data communication bus and the consist networks define a hierarchical communication architecture with the data communication bus acting as a communication backbone of the train and with the consist networks for communication between two or more terminals connected to the consist network within a car or between a terminal and the corresponding transceiver of that car. Communication between for example a locomotive and the vehicle units of the train is realized through the data communication bus and communication within the cars is realized through the consist networks. This has the advantage that the static, preconfigured consist networks may remain unchanged when the cars are coupled together to form a train and that the topology of the data communication bus may be determined dynamically as soon as the cars of a train are coupled together. Furthermore, the failure of a consist network does not have an influence on the communication between other consist networks and furthermore, by dividing the traffic within a consist network from the traffic on the data bus, the data bus, the traffic on the data bus may be reduced.

In another preferred embodiment of the invention the method further includes a step of assigning each transceiver to the vehicle unit comprising the transceiver by adding information for identifying the vehicle unit comprising the transceiver to the response message sent by that transceiver.

In this way, the master transceiver not only receives the information of the presence of a particular transceiver but may also the information regarding an identification of car that includes that particular transceiver. These information may be used by a corresponding higher instance such as a computer or the like having access to these information to gather an overview of the train.

Alternatively, the transceivers may be assigned to a particular car manually.

In a further preferred embodiment of the invention, the method includes a step of determining an order of the vehicle units within the rail vehicle by determining a path delay $P_D$ for transmitting a signal from the master transceiver to each slave transceiver and determining the order of the vehicle units based on the determined path delays.

Or in other words, based on the measured path delays, the master transceiver or a computing unit such as computer or the like may determine the order of the cars of the train. The longer the path delay of a particular transceiver is, the further away that transceiver is from the master.

Once the path delays of all transceivers has been determined, the order of the transceivers and therewith the order of the cars of the train can be determined. Hence, train inauguration can be done in a simple and automatic way instead of a time consuming train inauguration by manually identifying and addressing each car and determining their order within a train.

Preferably, the order of the vehicles of a train is communicated to each transceiver of the train such that each transceiver at least knows the position of its vehicle within the train. It is of course also possible to communicate the position of each and every car of the train to each and every transceiver of the train such that the transceivers do not only know their own position but also the position of all other vehicles of the train.

In another preferred embodiment of the invention, the path delay PD for transmitting a signal from the master transceiver to one of the slave transceivers includes

    a) determining a first time stamp when transmitting a first synchronization message by the master transceiver,

    b) determining a second time stamp when transmitting a second synchronization message by the slave transceiver,

    c) determining a third time stamp when receiving the second synchronization message by the master transceiver,

    d) determining a fourth time stamp when receiving the first synchronization message by the slave transceiver, and

    e) determining the path delay $P_D$ according to the formula

$$P_D = \frac{TS4_A - TS1_B + TS3_B - TS2_A}{2} \qquad (\text{I})$$

wherein $TS4_A$ is the fourth time stamp related to a clock of the slave transceiver, $TS1_B$ is the first time stamp related to a clock of the master transceiver, $TS3_B$ is the third time stamp related to a clock of the master transceiver and $TS2_A$ is the second time stamp related to a clock of the slave transceiver.

Or more generally, the path delay is determined as an average value of the transmission delays from the master to a slave and from this slave to the master.

It would however also be possible to determine the path delay as a single transmission delay from either from the master to the slave or from the slave to the master.

And it would of course be possible to determine the path delay as an average value of the transmission delays for multiple first and second synchronization messages.

In a more preferred embodiment of the invention, the path delay is determined by further considering the time components resulting from a drift of the clock of the master and the slave transceiver.

Preferably, the path delay is determined by considering the clock drifts according to the formula

$$P_D = \frac{TS4_A + \beta(\Delta_t)_A - TS1_B + TS3_B + \beta(\Delta_t)_B - TS2_A}{2} \qquad (\text{II})$$

wherein $\beta(\Delta_t)_A$ represents a component resulting from a drift of the clock of the master transceiver and $\beta(\Delta_t)_B$ represents a component resulting from a drift of the clock of the slave transceiver.

Neglecting the clock drift of the transceivers may result in a small error of the path delay as determined according to formula (I).

As can be seen, the higher the β components resulting from the clock drift are or the longer the time between the two consecutive time stamps on each transceiver is, the larger the inaccuracy of the mean path becomes when determining the path delay $P_D$ according to formula (I) compared to formula (II).

However, by using transceivers with an oscillator for their clocks that have an oscillator stability of 1 ppm (parts per million) or below and assuming a message duration of only some several hundreds of μs (microseconds) as well as that 5 ns (nanoseconds) correspond to a signal travelling distance of about 1 m (meter), the error of the path delay or the error of the distance travelled by the signal during the path delay is less than 5 m, which usually is acceptable when determining the path delay between two cars of a train.

Generally speaking, the path delay would have to be determined by further considering the time differences between the absolute time and the clock of the master as well as the clock of the slave transceiver. Such time differences are also designated as clock skew.

Further considering the clock skew, the path delay $P_D$ is determined according to the formula

$$P_D = \frac{\left((TS4_A + \alpha_A + \beta(\Delta_t)_A) - (TS1_B + \alpha_B)\right) + \left((TS3_B + \alpha_B + \beta(\Delta_t)_B) - (TS2_A + \alpha_A)\right)}{2} \qquad (\text{III})$$

wherein $\alpha_A$ represents a difference between a clock of the master transceiver and an absolute time, $\alpha_B$ represents a time difference between a clock of the slave transceiver and an absolute time.

However, as can be seen from this formula (III), these α components on both transceivers will cancel, resulting in formula (II). This means that the fact that the two transceivers are not synchronized, i.e. that they do not have the same absolute time, does not matter.

Formula (I) may also be slightly rearranged as follows:

$$P_D = \frac{(TS3_B - TS1_B) - (TS2_A - TS4_A)}{2} \qquad (IV)$$

This means that the mean path delay is calculated as half the round-trip delay seen by the master transceiver $(TS3_B - TS1_B)$ reduced by the delay of the slave response $(TS2_A - TS4_A)$. This shows that only a local time difference is sufficient to determine the slave position, which makes a clock synchronization irrelevant (and thus reduces complexity).

In another preferred embodiment of the invention, the method further includes a step of determining a spatial orientation of a vehicle unit by determining a path delay from the master transceiver to a first slave transceiver of that vehicle unit, determining a path delay from the master transceiver to a second slave transceiver of that vehicle unit and determining the spatial orientation of that vehicle unit based on the path delays of the first and the second slave transceivers of that vehicle unit.

Preferably, the two transceivers of a particular car not only transmit data to the master transceiver regarding the identification of the corresponding car, but also information regarding a location of the transceivers within that car. One of the transceivers is for example arranged at one end of the car and the other transceiver is arranged at the other end of the car. After having determined the path delays to both transceivers of the car, it is known which of the transceivers is closer to the master transceiver and accordingly which end of the car is closer to the master transceiver, hence how that vehicle unit is spatially oriented within the train.

In another preferred embodiment of the invention, the method further includes a step of transmitting a message from a first vehicle unit at one end of the rail vehicle to a last vehicle unit at another end of the rail vehicle by

- transmitting a call message over the data communication bus by the transceiver of the first vehicle unit,

- receiving the call message by a transceiver of at least one intermediate vehicle unit different from the first and the last vehicle unit,

- transmitting the call message over the data communication bus by the transceiver of the at least one intermediate vehicle unit and

- receiving the call message by the transceiver of the last vehicle unit.

The call message is also designated as a ping message hereinafter.

It is to note that the call message is not only received by the transceiver of the at least one intermediate vehicle unit and the last vehicle unit, but it is also received by the transceiver or transceivers of any other vehicle unit of the train. Accordingly, the transceiver of the first vehicle unit, which usually is the master transceiver, may transmit a message to the transceiver of each and every vehicle unit of the train. Or in other words, this method of data transmission may also be used as a broadcast channel from the master transceiver to the other transceivers.

Attention should be paid in this connection, that the term message must not be mixed up with the term signal that is used to transmit the message. Whereas the signal is transmitted by a particular transceiver, the signal is only recieved by other transceivers within the transmission range of the sending transceiver. The transmission range is also designated as a collision domain. Contrary, the term message denotes the data content to be transmitted and that is forwarded by the at least one intermediate vehicle.

In some train applications it is important that a certain action is carried out in each of the vehicles of a train at the same time. One example is synchronous braking. In some trains it is important that the vehicles of the train do activate their brakes at the same time in order to achieve the shortest possible braking distance for the train and to avoid unnecessary stress of the brakes and of the couplings of the vehciles.

It is therefore important that the application devices within the single vehicles that initiate the required action, for example the control unit that controls the activation of the brakes of a vehicle unit, do receive the corresponding command for action from the locomotive at the same time. Such a command is transmitted from the transceiver of the locomotive to the transceivers of the other vehicles of the train within a message such as for example the call message as described above. The absolute latency between the time that the locomotive sent the command and the time that all application devices receive the corresponding message, is not the critical requirement. The critical requirement is that the difference in reception time of each application device relative to the reception time of all other application devices is kept very low. As described above, the transceiver of a vehicle unit does know the position of the vehicle unit in the train. Based on that position within the train, the transceiver of a particular vehicle unit may determine the time that it will take for any message that it has received to be received by the last transceiver in the train.

Accordingly, in a preferred embodiment of the invention, the method further includes the step of receiving the call message by a transceiver of a vehicle unit, waiting for a delay and then forwarding the call message to an application device within that vehicle unit, wherein a duration of the delay is determined by the transceiver of that vehicle unit in dependency of a position of that vehicle unit in the rail vehicle.

Accordingly, the delay is determined in such a way that the further back the position of a vehicle is in the train, the lesser the delay.

In this way, the transceivers of the vehicle units do delay the command for a certain action individually such that the command is forwaded to the corresponding application devices of the vehicle units at the same time wherefore the application devices do receive the command and do therefore initiate the required action at the same time. For example, a brake signal sent from the locomotive to the vehicles of the train is received by the transceivers of the different vehicles at different points in time and is then delayed by the transceivers according to their position in the train and is then forwarded to the break controller of its vehicle such that the break command arrives at the break controllers in each car at the same time wherefore the breaks of all vehicles are activated at the same time.

In another preferred embodiment of the invention, the method includes a step of transmitting a broadcast from the first vehicle unit to any other vehicle unit of the rail vehicle. This is for example done by transmitting the call message by the transceiver of the first vehicle unit and receiving the call message by the transceiver of any other vehicle unit either directly from the first vehicle unit or indirectly from the at least one intermediate vehicle unit.

It is to note that in cases where the transceiver of the first vehicle unit of the train may directly communicate with the transceiver of the last vehicle unit of the train, no intermediate vehicle unit has to be involved. This may happen within short trains.

Once the transceiver of the last vehicle unit has received the call message, the transceiver of the last vehicle unit preferably responds to the call message by transmitting a reply message over the data communication bus by the transceiver of the last vehicle unit to the transceiver of the first vehicle unit via the transceiver of the at least one intermediate vehicle unit. The reply message is also designated as a pong message hereinafter.

The method of sending a ping message from the first car to the last car and then sending a pong message from the last car to the first car of the train end further receiving the pong message by the first car is referred to hereinafter as the ping-pong method.

This method of sending call and reply messages is used for transmitting data or other messages from one transceiver to another transceiver during normal operation of the train, i. e. after train inauguration.

After having received the reply message from the last car of the train, the master transceiver may ensure that his call message has been received by the last car. Accordingly, the master transceiver may attach any data or message to the call message and transmit this data or message to the last car and ensure that the last car has received that data or message once the master transceiver has received the corresponding reply message from the last car.

It is further to note that in order to send a message from the first to the last car of the train, it has to be known which of the cars of the train is the first one and which of them is the last one. Or in other words, the train topology has to be known. This is preferably achieved by the train inauguration as described before.

However, if the train topology has been determined using another method such as for example manually or using another method for determination of the train topology known in the art, the ping-pong method may also be applied independently of the detemination of the order of the cars according to the preferred embodiments of the invention as described above.

In a further preferred embodiment of the invention, the method includes monitoring an integrity of the rail vehicle by monitoring the receiving of the reply message from the last vehicle unit by the first vehicle unit.

Or in other words, by monitoring, whether the reply message from the last car of the train has been received by the first car, the first car may ensure that the last car is still part of the train, i. e. each and every car of the train is still coupled to the train and none of them has been lost.

In another preferred embodiment of the invention the method includes the step of allocating a right for transmission to a particular vehicle unit of the rail vehicle by the master transceiver by transmitting an allocation message within the call message from the first vehicle unit to that particular vehicle unit, and attaching a unit message to the call message or the reply message by that particular vehicle unit prior to forwarding the call message or the reply message including the unit message.

In this way, the master transceiver may allow a particular slave transceiver to transmit a message to the master transceiver or to any other transceiver of the train. Accordingly, any vehicle unit may transfer data or messages to any other car of the train.

In a further preferred embodiment of the invention the data is transmitted over the data communication bus by a broadband transmission technology. Preferably, data is transmitted with a carrier frequency higher than 1 MHz, more preferably with a carrier frequency higher than 2 MHz. Powerline communication technologies offer such broadband communication.

In another preferred embodiment, a PLC technology is used that provides for a highly accurate time synchronization across the transceivers which for example enables an accurate estimation of the latency between the transceivers. It is preferred that a PLC technology is used that provides for a time synchronization accuracy of about +-5 $\mu$s, more preferably for a time synchronization accuracy of $\pm$ 1 $\mu$s or even of only $\pm$ 0.5 $\mu$s.

As the power supply network is used as a data communication bus, it is preferred that the access to the data bus by the individual communication nodes is controlled in order to reduce the number of collisions on the bus. One measure to do so is the above mentioned master-slave method which controls the access to the bus and therefore reduces the number of collisions on the bus to a certain extent.

In another preferred embodiment of the invention data transmission is implemented by using a CSMA (Carrier Sense Multiple Access) protocol for controlling access of the data bus, for example a CSMA-CA protocol, that is a CSMA protocol with collision avoidance, in which nodes use the same carrier-sense and contention mechanism, but drop the message in case of a channel busy detection.

The CSMA protocol is for example used to coordinate the access of the data bus by the slave transceivers, particularly for sending the response and reply messages as outlined above.

According to the invention, a transceiver is adapted to carry out the method as described above. The transceiver is accordingly adapted to transmit and receive messages via the power cabling of a vehicle unit of a train vehicle and to send and receive such messages to and from other transceivers connected to the power supply network formed by interconnecting the power cablings of the cars of a train and using the power supply network as a data communication bus.

According to the invention, a vehicle unit of a rail vehicle comprises a power cabling and a transceiver according to the invention that is adapted to transmit and receive messages via the power cabling. The power cabling of the vehicle unit is connectable to the power cabling of at least one other vehicle unit of the rail vehicle to form a power supply network of the rail vehicle as well as a data communication bus for data transmission between the transceiver of the vehicle unit and a transceiver of said at least one other vehicle unit.

In a preferred embodiment of the invention, the power cabling of the vehicle unit is preferably adapted to form, when connected to the other vehicle units of a train, a power supply network with a frequency between 20 Hz and 100 Hz and an amplitude between 80 V and 600 V, preferable with a frequency between 45 Hz and 70 Hz and an amplitude between 200 V and 420 V.

It is even more preferred that the power supply network within the train corresponds to a mains supply network which usually have a frequency from 50 Hz to 60 Hz and an amplitude from 240 V to 400 V.

In a further preferred embodiment of the invention, the vehicle unit is a freight car adapted for frequent mechanical coupling with other vehicle units and decoupling from other vehicle units during normal operation.

The invention is, however, also applicable to passenger cars as well.

In another preferred embodiment of the invention, the vehicle unit includes an automatic mechanical coupling for coupling the vehicle unit to another vehicle unit, wherein the automatic mechanical coupling is adapted to automatically connect the power cabling of the vehicle unit to the power cabling of said other vehicle unit.

In this way the human interaction during the composition of a train including the Execution of train inauguration may be reduced to a minimum.

As described above, the power cabling of two neighboring vehicle units is connected to each other such as to obtain a power supply network that is also used as a data bus running through the whole train.

In order to avoid a communication interruption due to a single defective contact of the power cabling at the transition between two cars, the individual conductors of the power cabling between the vehicles are each doubled. In this way a redundancy is achieved which allows communication to be maintained even in the event of a defective contact.

This redundancy is achieved in that the single conductors of the power cabling are split at their ends and each split end of each conductor of the power cabling of a car is then connected to the corresponding split end of each conductor of the power cabling of the neighboring car. Accordingly, the power cablings are connected to each other by using a plug which provides twice the number of contacts for connecting the power cabling as the number of conductors of the power cabling. As such a power cabling usually includes two conductors, a neutral conductor and a phase conductor, a corresponding suitable plug includes four contacts for the power cabling, two for the neutral conductor and two for the phase conductor. If the power cabling includes further conductors such as for example an earth conductor, the plug includes two further contacts for each further conductor.

By providing such a redundancy, the risk of a communication breakdown due to a single bad contact is eliminated. Only if both contacts of a split conductor are defective, communication may end.

Furthermore, known connectors to connect two vehicles to each other do usually include a large number of contacts. For example four power contacts, four contacts for the break lines and eight contacts for a CAN bus. Contrary, the invention does only require four contacts for the two power conductors. No further contacts are necessary as the power lines are used for communication of all types. The reduced number of contacts already reduces the risk of a bad contact and therefore the probability of a communication breakdown. But this risk is even further reduced as the connectors to connect power lines to each other and their contacts are much more robust than for example the connectors to connect a CAN bus.

The reduction of the probability of a communication link failure is particularly important in the case of automatic couplings, where the establishment of the connection is usually not monitored on site by a human being.

Other advantageous embodiments and combinations of features come out from the detailed description below and the entirety of the claims.

**Brief description of the drawings**

The drawings used to explain the embodiments show:

Fig. 1          A train vehicle according to the invention;

Fig. 2          a schematic diagram for measuring the path delay between two nodes;

Fig. 3          a schematic diagram of a message exchange between two nodes and

Fig. 4          a schematic diagram of master reallocation during train topology detection and

Fig. 5 a)-d)    schematic diagrams of the discover ranges during train topology detection.

In the figures, the same components are given the same reference symbols.

**Preferred embodiments**

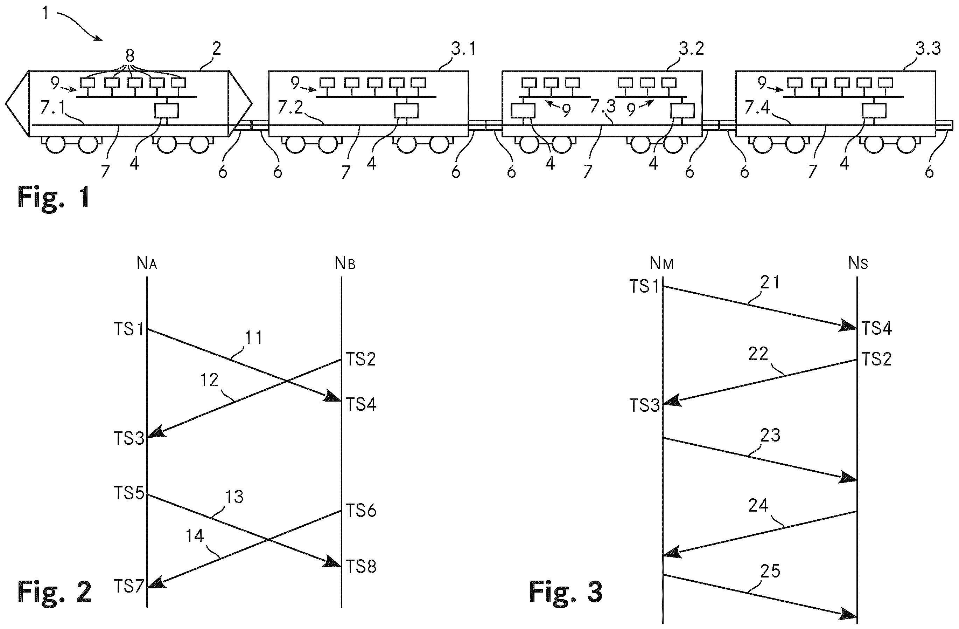

Fig. 1 shows a train 1 according to the invention. The train 1 includes a locomotive 2, a first car 3.1, a second car 3.2 and a third car 3.3. The first car 3.1 is coupled to the locomotive 2 via couplings 6 of the locomotive 2 and the first car 3.1. Similarly, the second car 3.2 is coupled to the first car 3.1 via couplings 6 and the third car 3.3 is coupled to the second car 3.2 via couplings 6.

As can be seen, the locomotive 2 and each car 3.1, 3.2, 3.3 includes a power cabling 7.1, 7.2, 7.3, 7.4 that are connected to each other to form a power supply network running from the locomotive 2 to the last car 3.3 and that forms the communication backbone 7.

Each car 3.1, 3.2, 3.3 further includes at least one PLC transceiver 4 connected to the power supply network 7 for transmitting and receiving data via communication backbone 7 using PLC technology. Whereas the locomotive 2, the first car 3.1 and the third car 3.2 include a single PLC transceiver 4, the second car 3.2 is shown to include two PLC transceivers 4.

Each PLC transceiver 4 is connected to a consist network 9 within the same car including a number of terminals 8 that may communicate with each other through the consist network as well as with other terminals in other cars 3.1, 3.2, 3.3 of the locomotive 2 through the PLC transceiver 4 and the communication backbone 7. Accordingly, the PLC transceiver 4 acts as a gateway between the communication backbone 7 and the single consist networks 9. The communication backbone 7 and the consist networks therefore define a hierarchical communication architecture. Communication between the locomotive 2 and the cars 3.1, 3.2, 3.3 is realized through the communication backbone 7 and communication within the locomotive 2 or within a particular car 3.1, 3.2, 3.3 is realized through the corresponding consist network 9.

Whereas the second car 3.2 is shown to include two separate consist networks 9 each connected to another one of the PLC transceivers 4, it is also possible that both PLC transceivers 4 were connected to a single consist network.

Another aspect shown in fig. 1 is the fact, that the communication backbone 7 is shown to run through the couplings 6, which means that the power cablings 7.1, 7.2, 7.3, 7.4 are connected to each other automatically when the cars are mechanically coupled to each other via the couplings 6.

Fig. 2 shows a schematic diagram for measuring the path delay between two transceivers, i. e. two nodes $N_A$, $N_B$, connected to the data bus.

For determining the path delay between the nodes $N_A$, $N_B$, four different timestamps TS1, TS2, TS3, TS4 are determined. These timestamps TS1, TS2, TS3, TS4 may for example be determined during synchronisation of the nodes $N_A$, $N_B$.

A first sync message 11 is sent from node $N_A$ to node $N_B$ at a first time defining the first timestamp TS1. This first sync message 11 is received at node $N_B$, at a second time defining the fourth timestamp TS4. Then a second sync message 12 is sent from node $N_B$ to node $N_A$ at a third time defining the second timestamp TS2. This second sync message 12 is received at node $N_A$, at a fourth time defining the third timestamp TS3. Further sync messages 13, 14 may be sent from node $N_A$ to node $N_B$ or from node $N_B$ to node $N_A$.

Then, based on these timestamps TS1, TS2, TS3, TS4 the path delay between the nodes $N_A$, $N_B$ can be determined according to any of the two formulas (I) or (II) for calculating $P_D$ given further above. To do so, all four timestamps TS1, TS2, TS3, TS4 have to be available at one of the nodes $N_A$, $N_B$ such that the respective node $N_A$, $N_B$ may execute the calculations to determine the path delay $P_D$. Whereas each node knows the timestamps generated at that node, the other timestamps have to be transferred to the other node. For example, if node $N_B$, which knows the timestamps TS2, TS4, is to determine the path delay, the timestamps TS1, TS3 have to be transferred from node $N_A$ to node $N_B$. This may be done by using either the first sync message 11 or any later sync message 13 sent from node $N_A$ to node $N_B$.

Fig. 3 shows a schematic diagram of a message exchange between two a master node $N_M$ and a slave node $N_S$. In this example, the message exchange serves for the determination of the train topology, i. e. the order of the nodes.

The so-called discovery phase aims at finding all nodes (slaves) within the range of a master node and determining their position in the train topology. Channel access is coordinated using a combination of master-slave allocation and CSMA. The discovery phase is initiated by the master node $N_M$, which sends a discover-message 21 onto the data bus. Each (slave) node within the range of the master node $N_M$ enters a contention phase to compete for channel access. The node that wins this contention, in this case the slave node $N_S$, sends a discover-response-message 22 onto the bus. At the same time, both messages are used to trigger a timestamp TS1, TS2, TS3, TS4 for both sending and receiving events. The master node $N_M$ then sends a timestamp-request-message 23 to the slave node $N_S$ which responds by sending the requested information within a timestamp-response-message 24.

Then, this process is repeated by sending another discover-message 25 by the master node $N_M$ to start a new discovery round. This discover-message 25 also serves as acknowledgement for the slave node $N_S$ of the previous round that the master node $N_M$ has received the timestamp-response-message 24.

The full topology knowledge of the train is accumulated by the master node NM as the topology detection approaches the end of the train.

The discovery phase ends as soon as all nodes within the range of the master node $N_M$ have been discovered.

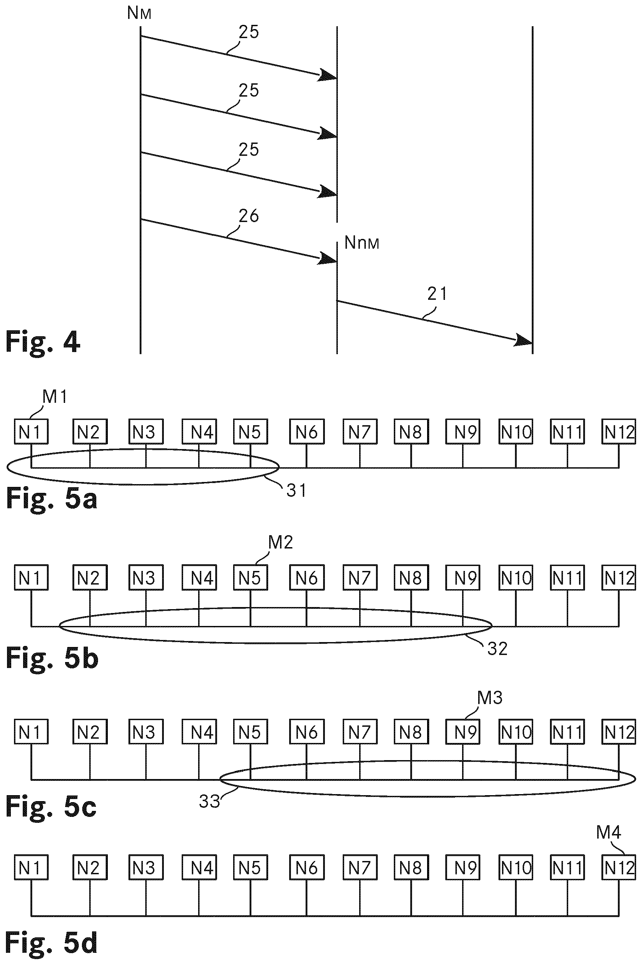

Fig. 4 shows the determination of the end of the discovery phase and the allocation of the master role to another transceiver to become the new master node.

It is determined, that all nodes within the range of the master have responded to the discover-messages of the master node $N_M$, if a pre-defined number of retransmissions of the discover-message by the master node $N_M$, remains unanswered by any further slave node. In order to extend the coverage to the whole train, the master role is then passed to another transceiver further down the topology towards the end of the train. This is done by sending a master-allocation-message 26 from the current master node $N_M$ to the new master node $N_{nM}$.

The master allocation message 26 contains the whole topology knowledge acquired so far such that the new master node $N_{nM}$ has this knowledge too.

Then, the discovery phase continues in that the new master node $N_{nM}$ starts a new discovery round by sending a discover-message 21 onto the bus. Now, slave nodes that have not yet been reached by the previous master node but are reached by the discover-message 21 of the new master node $N_{nM}$ will respond and the topology knowledge of the train is further extended.

The discovery phase and master allocation are repeated in alternating order until all slave nodes have been discovered.

Fig., 5a to 5d do show this procedure, where N1 - to N12 designate the nodes of a train. In this example, the train includes twelve nodes.

As shown in fig. 5a, at the start of the discovery phase, the first node N 1 is the first master node M 1. The first master node M 1 has a discover range 31 that includes in this examples nodes N2 to N5. After having reached all nodes N2 to N5, the first master node M 1 sends a master allocation message to the fifth node N5, which is the most distant node from the first master node M 1, to become the second master node M2.

As shown in fig. 5b, then, the fifth node becomes the second master node M2 that continues the discovery phase and has a discover range 32 that includes nodes N2 to node N9. As nodes N2 to N4 have already been reached by the first master node M 1, they are already included in the train topology sent from the first master node M 1 to the second master node M2 within the master-allocation-message. By sending discover-messages, the second master node M2 may expand the train topology to the not yet known nodes N6 to N9. As no further node is answering the discover-messages, the second master node M2 sends a master allocation message to the ninth node N9, which is the most distant node from the second master node M2, to become the third master node M3.

As shown in fig. 5c, the ninth node N9 becomes the third master node M3 that continues the discovery phase by sending discover-messages and has a discover range 33 that includes nodes N5 to N 12. As nodes N5 to N8 have already been reached by the first and the second master node M1, M2, they are already included in the train topology sent from the second master node M2 to the third master node M3 within the master-allocation-message. The third master node M3 may therefore expand the train topology to the not yet known nodes N10 to N12.

Due to this alternating order of discovery phase and master allocation, the last node N 12 in the topology will eventually become the fourth master node M4. The discovery phase of this last node, however, will remain unanswered as no more undiscovered slave nodes remain.

As soon as the fourth master node M4 detects, that no more slaves are answering his discovery-messages, it will finalize the train topology detection by sequentially assigning an address to each of the nodes N 1 to N 12 starting with the address 1 for the first master node M 1, also designated as the grandmaster node.

This address assignment is then sent with a topology-distribution message from the fourth master node M4 to the previous node in the topology which is node 11 in this example. This node N11 sends the topology-distribution message to its previous node in the topology which is node 10 and so on, until the topology-distribution message has reached the first master node M 1.

Doing so guarantees that each node finalizes the train topology detection and receives its address assignment. It is also guaranteed that if the message arrives at the grandmaster, all nodes have consistently terminated train topology detection and have received their address assignment.

In this way, a fast train inauguration may be realized wherein the term fast means within several seconds. Measurements have shown that train inauguration may be completed within about 5 seconds. Furthermore, the overall train length may be determined with an accuracy of $\pm$ 2%. And the addressing of the nodes and the train topology determination is also realized during train inauguration.

In summary, it is to be noted that the invention provides a method for a fast and reliable train inauguration of a train as well as a fast and reliable data transmission within the train during normal operation and which fulfills the high demands regarding data periodicity and transmission latency and that may handle a large number of cars at reasonable costs

**Claims**

1. Method for data transmission within a rail vehicle with two or more vehicle units mechanically coupled to each other, each vehicle unit comprising a power cabling, wherein the power cabling of the vehicle units are connected to each other to form a power supply network, transmitting a message from a master transceiver included in one of the vehicle units to at least one slave transceiver included in another one of the vehicle units using the power supply network as a data communication bus, **characterized in that** the method for data transmission includes a step of addressing the transceivers comprising the steps of

   a) transmitting a request message over the data communication bus by the master transceiver,
   b) receiving the request message by at least one slave transceiver,
   c) transmitting a response message over the data communication bus by each slave transceiver that has received the request message,
   d) receiving the response message of each slave transceiver by the master transceiver,
   e) assigning an address by the master transceiver to each slave transceiver whose response has been received by the master transceiver,
   f) selecting one of the transceivers that has already been assigned an address as a new master transceiver and
   g) repeating steps a) to f) until each vehicle unit of the rail vehicle that includes a transceiver is assigned an address.

2. Method according to claim 1, further including a step of assigning each transceiver to the vehicle unit comprising the transceiver by adding information for identifying the vehicle unit comprising the transceiver to the response message sent by that transceiver.

3. Method according to any of claims 1 to 2, including a step of determining an order of the vehicle units within the rail vehicle by determining a path delay $P_D$ for transmitting a signal from the master transceiver to each slave transceiver and determining the order of the vehicle units based on the determined path delays.

4. Method according to claim 3, wherein determining the path delay $P_D$ for transmitting a signal from the master transceiver to one of the slave transceivers includes

   a) determining a first time stamp when transmitting a first synchronization message by the master transceiver,
   b) determining a second time stamp when transmitting a second synchronization message by the slave transceiver,

c) determining a third time stamp when receiving the second synchronization message by the master transceiver,
d) determining a fourth time stamp when receiving the first synchronization message by the slave transceiver, and
e) determining the path delay $P_D$ according to the formula

$$P_D = \frac{TS4_A - TS1_B + TS3_B - TS2_A}{2} ,$$

wherein $TS4_A$ is the fourth time stamp related to a clock of the master transceiver, $TS1_B$ is the first time stamp related to a clock of the slave transceiver, $TS3_B$ is the third time stamp related to a clock of the slave transceiver and $TS2_A$ is the second time stamp related to a clock of the master transceiver.

5. Method according to claim 3 or 4, including a step of determining a spatial orientation of a vehicle unit by determining a path delay from the master transceiver to a first slave transceiver of that vehicle unit, determining a path delay from the master transceiver to a second slave transceiver of that vehicle unit and determining the spatial orientation of that vehicle unit based on the path delays of the first and the second slave transceivers of that vehicle unit.

6. Method according to any of claims 3 to 4, including a step of transmitting a message from a first vehicle unit at one end of the rail vehicle to a last vehicle unit at another end of the rail vehicle by

- transmitting a call message over the data communication bus by the transceiver of the first vehicle unit,
- receiving the call message by a transceiver of at least one intermediate vehicle unit different from the first and the last vehicle unit,
- transmitting the call message over the data communication bus by the transceiver of the at least one intermediate vehicle unit and
- receiving the call message by the transceiver of the last vehicle unit.

7. Method according to claim 6, including a step of receiving the call message by a transceiver of a vehicle unit, waiting for a delay and then forwarding the call message to an application device within that vehicle unit, wherein a duration of the delay is determined by the transceiver of that vehicle unit in dependency of a position of that vehicle unit in the rail vehicle.

8. Method according to claim 6, including a step of transmitting a broadcast from the first vehicle unit to any other vehicle unit of the rail vehicle by transmitting the call message by the transceiver of the first vehicle unit and receiving the call message by the transceiver of any other vehicle unit either directly from the first vehicle unit or indirectly from the at least one intermediate vehicle unit.

9. Method according to any of claims 6 to 8, including transmitting a reply message over the data communication bus by the transceiver of the last vehicle unit to the transceiver of the first vehicle unit via the transceiver of the at least one intermediate vehicle unit.

10. Method according to claim 9, including monitoring an integrity of the rail vehicle by monitoring the receiving of the reply message from the last vehicle unit by the first vehicle unit.

11. Method according to any of claims 6 to 10, including allocating a right for transmission to a particular vehicle unit of the rail vehicle by the master transceiver by transmitting an allocation message within the call message from the first vehicle unit to that particular vehicle unit, and attaching a unit message to the call message or the reply message by that particular vehicle unit prior to forwarding the call message or the reply message including the unit message.

12. Method according to any of the preceding claims, wherein the data is transmitted with a broadband transmission technology, preferably with a carrier frequency higher than 1 MHz, more preferably with a carrier frequency higher than 2 MHz.

13. Transceiver for carrying out the method according to any of claims 1 to 11.

14. Vehicle unit of a rail vehicle, comprising a power cabling and a transceiver according to claim 12 adapted to transmit and receive messages via the power cabling, wherein the power cabling of the vehicle unit is connectable to a power cabling of at least one other vehicle unit of the rail vehicle to form a power supply network of the rail vehicle as well as a data communication bus for data transmission between the transceiver of the vehicle unit and a transceiver of said at least one other vehicle unit.

15. Vehicle unit according to claim 14, wherein the vehicle unit is a freight car adapted for frequent mechanical coupling with other vehicle units and decoupling from other vehicle units during normal operation.

16. Vehicle unit according to any of claims 14 to 15, including an automatic mechanical coupling for coupling the vehicle unit to said other vehicle unit, wherein the automatic mechanical coupling is adapted to automatically connect the power cabling of the vehicle unit to the power cabling of said other vehicle unit.

**Fig. 1**

**Fig. 2**

**Fig. 3**

Fig. 4

Fig. 5a

Fig. 5b

Fig. 5c

Fig. 5d

Europäisches
Patentamt

European
Patent Office

Office européen
des brevets

## EUROPEAN SEARCH REPORT

Application Number

EP 20 16 8770

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 353 413 A (NOVAKOVICH MICHAEL R [US] ET AL) 4 October 1994 (1994-10-04) | 1,2,13 | INV. H04L12/40 |
| Y | * column 5, line 6 - column 12, line 61; figure 1 * | 3,5,6, 8-10,12, 14-16 | B61L15/00 |
| Y | US 2010/118988 A1 (SMITH JR EUGENE A [US] ET AL) 13 May 2010 (2010-05-13) * paragraphs [0058] - [0081]; figure 1 * | 3,5,6, 8-10, 14-16 | |
| Y | US 2016/359741 A1 (COOPER JARED KLINEMAN [US] ET AL) 8 December 2016 (2016-12-08) | 12 | |
| A | * paragraphs [0039] - [0049], [0116], [0137], [0398] - [0509] * | 1-11, 13-16 | |
| A | EP 1 065 128 A1 (DEUTSCHE BAHN AG [DE]) 3 January 2001 (2001-01-03) * paragraphs [0013] - [0022]; figure 1 * | 1-16 | |
| A | US 2015/074277 A1 (SHIGEEDA TETSUYA [JP]) 12 March 2015 (2015-03-12) * paragraphs [0009], [0028] - [0036], [0057] - [0063]; figures 1,2,11 * | 1-16 | TECHNICAL FIELDS SEARCHED (IPC) H04L B61L |

The present search report has been drawn up for all claims

| Place of search | Date of completion of the search | Examiner |
|---|---|---|
| Munich | 15 September 2020 | Itani, Maged |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 8770

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2020

| Patent document cited in search report | | Publication date | Patent family member(s) | | Publication date |
|---|---|---|---|---|---|
| US 5353413 | A | 04-10-1994 | NONE | | |
| US 2010118988 | A1 | 13-05-2010 | NONE | | |
| US 2016359741 | A1 | 08-12-2016 | US 2016359741 A1 | | 08-12-2016 |
| | | | US 2018205650 A1 | | 19-07-2018 |
| EP 1065128 | A1 | 03-01-2001 | AT 282541 T | | 15-12-2004 |
| | | | DE 19929644 A1 | | 11-01-2001 |
| | | | EP 1065128 A1 | | 03-01-2001 |
| US 2015074277 | A1 | 12-03-2015 | CN 104221330 A | | 17-12-2014 |
| | | | EP 2835936 A1 | | 11-02-2015 |
| | | | JP 5490329 B2 | | 14-05-2014 |
| | | | JP WO2013150601 A1 | | 14-12-2015 |
| | | | US 2015074277 A1 | | 12-03-2015 |
| | | | WO 2013150601 A1 | | 10-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9819885 A1

- WO 2006075767 A2